# EUROPEAN PATENT APPLICATION

(11) **EP 4 800 338 A1**
(43) Date of publication of application: **02.09.2026**
(21) Application number: 24890196.9
(22) Date of filing: 01.08.2024
(51) Int. Cl.: F26B 13/08, B05D 3/02, H01M 4/04

(54) **DRYING APPARATUS AND MANUFACTURING SYSTEM FOR ELECTRODE PLATE**

(30) Priority: 14.11.2023 CN 202311516189
(71) Applicant: Contemporary Amperex Technology Co., Limited, Ningde, Fujian 352100 (CN)
(72) Inventor: YU, Linzhen, Ningde, Fujian 352100 (CN); LU, Lei, Ningde, Fujian 352100 (CN); DENG, Zhikai, Ningde, Fujian 352100 (CN); ZHENG, Tuo, Ningde, Fujian 352100 (CN); LI, Shisong, Ningde, Fujian 352100 (CN)
(74) Representative: Kraus & Lederer PartGmbB
(86) International application number: PCT/CN2024/109248
(87) International publication number: WO 2025/102832

(57) **Abstract**

The present application relates to the field of batteries. Provided are a drying apparatus and an electrode sheet manufacturing system. The drying apparatus comprises a housing and a drying device, the housing being provided with a drying cavity, the drying cavity being provided with a material strip inlet and a material strip outlet, and the drying device being arranged inside the drying cavity. The drying device comprises a first drying module, a second drying module and a conveying mechanism; the first drying module and the second drying module are used for drying material strips; the conveying mechanism is used for conveying the material strips, so that the material strips, from the material strip inlet, sequentially pass the first drying module, the second drying module and the material strip outlet; and the drying temperature of the first drying module is higher than the drying temperature of the second drying module. The drying apparatus is provided with the first drying module and the second drying module and the drying temperature of the first drying module is higher than the drying temperature of the second drying module; after entering the drying cavity through the material strip inlet, material strips are first rapidly dried at a high temperature by the first drying module and then are continuously dried by the second drying module, thereby improving the drying efficiency and achieving better drying quality.

## Description

### CROSS-REFERENCE TO RELATED APPLICATION

The present application claims priority to Chinese Patent Application (Application No. 2023115161895), filed on November 14, 2023 and entitled "DRYING APPARATUS AND MANUFACTURING SYSTEM FOR ELECTRODE PLATE", the content of which is incorporated herein by reference in its entirety.

### TECHNICAL FIELD

The present application relates to the field of batteries, and in particular, to a drying apparatus and a manufacturing system for an electrode plate.

### BACKGROUND

Batteries are widely used in the new energy field, such as in electric vehicles and new energy vehicles. New energy vehicles and electric vehicles have become a new trend in the development of the automobile industry. The manufacturing of electrode plates is an important part of battery manufacturing. During the manufacturing of electrode plates, the current collector is usually coated with an active substance layer, and the coated active substance layer needs to be dried using a drying apparatus. However, the drying efficiency of the existing drying apparatus is relatively low.

### SUMMARY

An objective of embodiments of the present application is to provide a drying apparatus and a manufacturing system for an electrode plate, which is intended to alleviate the problem of relatively low drying efficiency of the drying apparatus in the related art.

In a first aspect, the embodiments of the present application provide a drying apparatus. The drying apparatus includes a housing and a drying device. The housing is provided with a drying chamber, and the drying chamber is provided with a strip inlet and a strip outlet. The drying device is disposed in the drying chamber, and the drying device includes a first drying module, a second drying module, and a conveying mechanism. The first drying module and the second drying module are configured to dry the material strip, and the conveying mechanism is configured to convey the material strip, such that the material strip sequentially passes through the first drying module, the second drying module, and the strip outlet from the strip inlet. A drying temperature of the first drying module is higher than a drying temperature of the second drying module.

In the above technical solution, the drying apparatus is provided with the first drying module and the second drying module, and the drying temperature of the first drying module is higher than the drying temperature of the second drying module, such that after the material strip enters the drying chamber from the strip inlet, the material strip is first rapidly dried at a high temperature by the first drying module, and then continuously dried by the second drying module. In this way, not only can the drying efficiency be improved, but also a relatively good drying quality is achieved.

As an optional technical solution of the embodiments of the present application, the first drying module extends along a first direction; the second drying module includes a plurality of drying parts, the plurality of drying parts are arranged along the first direction, and the material strip sequentially passes around the plurality of drying parts, the drying parts being configured to dry the material strip.

In the above technical solution, by providing the plurality of drying parts and allowing the material strip to sequentially pass around the plurality of drying parts, the space in the drying chamber is effectively utilized, the travel length of the material strip in the drying chamber is increased, and the plurality of drying parts jointly dry the material strip, thereby improving the drying effect.

As an optional technical solution of the embodiments of the present application, along a second direction, the drying parts are located at a bottom of the first drying module, and the second direction intersects with the first direction.

In the above technical solution, the drying part is located at the bottom of the first drying module along the second direction, which can make full use of the space of the drying chamber in the second direction, thereby reducing the volume occupied by the drying apparatus in the first direction.

As an optional technical solution of the embodiments of the present application, the drying apparatus further includes a third drying module; along a conveying direction of the conveying mechanism, the third drying module is located downstream of the second drying module, and a drying temperature of the third drying module is lower than a drying temperature of the second drying module; along the second direction, the third drying module is located at a bottom of the drying parts.

In the above technical solution, the third drying module is provided, and the drying temperature of the third drying module is lower than the drying temperature of the second drying module; the material strip sequentially passes through the first drying module, the second drying module, and the third drying module for drying, thereby achieving a relatively good drying effect. In addition, the third drying module is closer to the strip outlet than the second drying module, and the third drying module performs low-temperature drying on the material strip, such that the temperature of the material strip is reduced, and the temperature of the material strip approaches the ambient temperature outside the drying apparatus. In this way, an excessive temperature difference before and after the material strip exits the drying apparatus is prevented, thereby reducing the risk of wrinkling of the material strip due to a sudden temperature decrease of the material strip.

As an optional technical solution of the embodiments of the present application, the conveying mechanism includes a plurality of top winding mechanisms and a plurality of bottom winding mechanisms; the plurality of top winding mechanisms and the plurality of bottom winding mechanisms are all arranged along the first direction, and along the second direction, the top winding mechanisms are located at a top of the drying parts, and the bottom winding mechanisms are located at a bottom of the drying parts; the material strip alternately passes around the top winding mechanisms and the bottom winding mechanisms.

In the above technical solution, by providing the plurality of top winding mechanisms and the plurality of bottom winding mechanisms, and allowing the material strip to alternately pass around the top winding mechanisms and the bottom winding mechanisms, the material strip forms a curved travel path in the drying chamber, such that the travel length of the material strip in the drying chamber is increased, and the joint drying of the material strip by the plurality of drying parts is facilitated, thereby improving the drying effect.

As an optional technical solution of the embodiments of the present application, at least one top winding mechanism includes a plurality of first rollers spaced apart from each other along an arc-shaped trajectory, and the first rollers are configured for winding the material strip therearound.

In the above technical solution, the plurality of first rollers are provided, and the material strip is wound around and in contact with each first roller, such that the total contact area between the plurality of first rollers and the material strip is increased, thereby enabling the material strip to be less prone to wrinkling and deviation. In addition, the plurality of first rollers are spaced apart from each other along an arc-shaped trajectory, such that the weight of the material strip is not entirely concentrated on a single first roller, but the weight of the material strip can be distributed among the plurality of first rollers. Thus, the tension of the material strip between two adjacent first rollers is relatively small, thereby enabling the material strip to be less prone to wrinkling or breakage.

As an optional technical solution of the embodiments of the present application, at least one bottom winding mechanism includes a heating roller configured for winding the material strip therearound, and the heating roller is configured to heat and dry the material strip.

In the above technical solution, the heating roller is provided; the heating roller not only can serve to convey the material strip, but also can heat and dry the material strip, thereby helping to improve the drying efficiency.

As an optional technical solution of the embodiments of the present application, the conveying mechanism further includes a side winding mechanism; along the first direction, at least one side of the drying part is provided with the side winding mechanism, and the material strip sequentially passes around the top winding mechanism, the side winding mechanism, and the bottom winding mechanism.

In the above technical solution, by providing the side winding mechanism, the weight of the material strip is shared by the side winding mechanism, thereby reducing the risk of excessive tension on the material strip due to its own weight, and enabling the material strip to be less prone to wrinkling or breakage. In addition, by providing the side winding mechanism and allowing the material strip to sequentially pass around the top winding mechanism, the side winding mechanism, and the bottom winding mechanism, the material strip receives increased support, thereby reducing the risk of vibration of the material strip under the action of an external force.

As an optional technical solution of the embodiments of the present application, the side winding mechanism includes at least one second roller configured for winding the material strip therearound.

In the above technical solution, by providing the second roller configured for winding the material strip therearound, it is simple, convenient, and cost-effective.

As an optional technical solution of the embodiments of the present application, the conveying mechanism includes a heating roller configured for winding the material strip therearound, and the heating roller is configured to heat and dry the material strip.

In the above technical solution, the heating roller is provided; the heating roller not only can serve to convey the material strip, but also can heat and dry the material strip, thereby helping to improve the drying efficiency.

As an optional technical solution of the embodiments of the present application, the first drying module is an infrared drying module, and the second drying module is a hot-air drying module.

In the above technical solution, when the material strip just enters the drying chamber, the active substance layer has a relatively high moisture content, resulting in a relatively large self-weight of the material strip, such that the material strip is more likely to vibrate when subjected to an external force. Therefore, when the material strip is dried by the infrared drying module, the infrared drying module does not apply a force to the material strip, thereby reducing the risk of vibration of the material strip. The hot-air drying module generates hot air to dry the material strip, such that the material strip is dried more uniformly, thereby improving the drying quality.

As an optional technical solution of the embodiments of the present application, the drying apparatus further includes a third drying module; along a conveying direction of the conveying mechanism, the third drying module is located downstream of the second drying module, and a drying temperature of the third drying module is lower than a drying temperature of the second drying module.

In the above technical solution, the third drying module is provided, and the drying temperature of the third drying module is lower than the drying temperature of the second drying module; the material strip sequentially passes through the first drying module, the second drying module, and the third drying module for drying, thereby achieving a relatively good drying effect. In addition, the third drying module is closer to the strip outlet than the second drying module, and the third drying module performs low-temperature drying on the material strip, such that the temperature of the material strip is reduced, and the temperature of the material strip approaches the ambient temperature outside the drying apparatus. In this way, an excessive temperature difference before and after the material strip exits the drying apparatus is prevented, thereby reducing the risk of wrinkling of the material strip due to a sudden temperature decrease of the material strip.

As an optional technical solution of the embodiments of the present application, the third drying module is an infrared drying module.

In the above technical solution, the infrared drying module is used to perform low-temperature drying. The drying temperature is easy to control, the drying cost is low, and the drying process is less susceptible to external airflow interference, thereby achieving a relatively good drying effect.

As an optional technical solution of the embodiments of the present application, the housing is provided with two drying chambers independent of each other; the two drying chambers are arranged along a gravity direction, and each of the drying chambers is provided with the drying device therein.

In the above technical solution, by providing the two drying chambers, one drying chamber may be configured to dry one side of the material strip, and the other drying chamber may be configured to dry the other side of the material strip, thereby improving the drying effect on the material strip. By arranging the two drying chambers along the gravity direction, the space in the gravity direction is effectively utilized, thereby reducing the area occupied by the drying apparatus.

As an optional technical solution of the embodiments of the present application, along a first direction, the housing is provided with a first side and a second side opposite to each other, the first direction intersects with the gravity direction, a strip inlet of one drying chamber and a strip outlet of the other drying chamber are located on the first side, and a strip outlet of one drying chamber and a strip inlet of the other drying chamber are located on the second side.

In the above technical solutions, by allowing the strip inlet of one drying chamber and the strip outlet of the other drying chamber to be located on the first side, and allowing the strip outlet of one drying chamber and the strip inlet of the other drying chamber to be located on the second side, after the material strip is discharged from the strip outlet of one drying chamber, the material strip can then enter the other drying chamber from the strip inlet of the other drying chamber, which is simple and rapid and reduces the transfer of the material strip.

In a second aspect, the embodiments of the present application further provide a manufacturing system for an electrode plate. The manufacturing system for an electrode plate includes a manufacturing apparatus for an electrode plate and the above drying apparatus. The manufacturing apparatus for an electrode plate is configured to manufacture an electrode plate; the drying apparatus is disposed downstream of the manufacturing apparatus for an electrode plate, and the drying apparatus is configured to dry the electrode plate.

### BRIEF DESCRIPTION OF THE DRAWINGS

To more clearly illustrate the technical solutions in embodiments of the present application, the drawings required for use in the embodiments will be briefly described below. It should be understood that the following drawings only illustrate some embodiments of the present application and therefore should not be considered as limiting the scope of the present application, and other related drawings can be derived from these drawings by those of ordinary skill in the art without creative efforts.
FIG. 1 is a schematic diagram of an internal structure of a drying apparatus according to some embodiments of the present application;
FIG. 2 is a schematic diagram of an internal structure of a drying apparatus according to some other embodiments of the present application;
FIG. 3 is a schematic diagram of an internal structure of a drying apparatus according to yet some other embodiments of the present application;
FIG. 4 is a schematic diagram of an internal structure of a drying apparatus according to still some other embodiments of the present application; and
FIG. 5 is a schematic diagram of an internal structure of a drying apparatus according to further still some other embodiments of the present application.

Reference numerals: 10-drying device; 11-housing; 111-drying chamber; 112-strip inlet; 113-strip outlet; 12-drying apparatus; 121-first drying module; 122-second drying module; 1221-drying part; 13-conveying mechanism; 131-top winding mechanism; 1311-first roller; 132-bottom winding mechanism; 1321-heating roller; 133-side winding mechanism; 1331-second roller; 14-third drying module; 20-material strip.

### DETAILED DESCRIPTION

To make the objectives, technical solutions, and advantages of embodiments of the present application clearer, the technical solutions in the embodiments of the present application will be clearly described hereinafter with reference to the drawings in the embodiments of the present application. It is apparent that the described embodiments are some, but not all, embodiments of the present application. Based on the embodiments in the present application, all other embodiments obtained by those of ordinary skill in the art without creative efforts shall fall within the protection scope of the present application.

Unless otherwise defined, all technical and scientific terms used in the present application have the same meaning as commonly understood by those skilled in the art to which the present application belongs. The terms used in the specification of the present application are only used to describe specific embodiments and are not intended to limit the present application. The terms "include", "comprise", "have", "provided with", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments.

In the description of the present application, it should be noted that unless otherwise explicitly specified or limited, the terms "mount", "interconnect", "connect", and "attach" shall be construed broadly and may be, for example, fixed connection, detachable connection, or integrated connection, or direct connection, indirect connection via an intermediate, or a communication between interiors of two elements. For those of ordinary skill in the art, the specific meanings of the above terms in the present application can be understood based on specific conditions.

In the present application, the term "and/or" is merely a way to describe the association relationship between associated objects and indicates that there may be three relationships. For example, A and/or B may indicate that: only A is present, both A and B are present, and only B is present. In addition, the character "/" in the present application generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device, are only exemplary and should not be construed as limiting the present application in any way.

The term "plurality of" used in the present application refers to two or more (including two).

In the present application, battery cells may include lithium-ion secondary batteries, lithium-ion primary batteries, lithium-sulfur batteries, sodium-lithium-ion batteries, sodium-ion batteries, magnesium-ion batteries, or the like. This is not limited in the embodiments of the present application. The battery cell may be cylindrical, flat, rectangular parallelepiped-shaped, or in other shapes. This is also not limited in the embodiments of the present application. According to the way of packaging, battery cells are generally divided into three types: cylindrical battery cells, prismatic battery cells, and pouch battery cells. This is also not limited in the embodiments of the present application.

The battery mentioned in the embodiments of the present application refers to a single physical module including one or a plurality of battery cells to provide higher voltage and capacity. For example, the battery mentioned in the present application may include a battery module, a battery pack, or the like. The battery generally includes a case configured to enclose one or more battery cells. The case can, to a certain extent, prevent liquid or other foreign matter from affecting the charging or discharging of the battery cells.

A battery cell includes an electrode assembly and an electrolyte. The electrode assembly is composed of a positive electrode plate, a negative electrode plate, and a separator. The battery cell primarily works by the movement of metal ions between the positive electrode plate and the negative electrode plate. The positive electrode plate includes a positive electrode current collector and a positive electrode active substance layer. The surface of the positive electrode current collector is coated with the positive electrode active substance layer. The positive electrode current collector not coated with the positive electrode active substance layer protrudes from the positive electrode current collector coated with the positive electrode active substance layer. The positive electrode current collector not coated with the positive electrode active substance layer serves as a positive electrode tab. Taking lithium-ion batteries as an example, the material of the positive electrode current collector may be aluminum, and the positive electrode active substance may be lithium cobaltate, lithium iron phosphate, ternary lithium, lithium manganate, or the like. The negative electrode plate includes a negative electrode current collector and a negative electrode active substance layer. The surface of the negative electrode current collector is coated with the negative electrode active substance layer. The negative electrode current collector not coated with the negative electrode active substance layer protrudes from the negative electrode current collector coated with the negative electrode active substance layer. The negative electrode current collector not coated with the negative electrode active substance layer serves as a negative electrode tab. The material of the negative electrode current collector may be copper, and the negative electrode active substance may be carbon, silicon, or the like. To ensure the passing of a large current without fusing, a plurality of positive electrode tabs are provided and stacked together, and a plurality of negative electrode tabs are provided and stacked together. The material of the separator may be polypropylene (PP), polyethylene (PE), or the like. In addition, the electrode assembly may be of a wound structure or a stacked structure, but the embodiments of the present application are not limited thereto.

At present, judging from the trends of the market situation, the application of batteries is becoming increasingly widespread. Batteries are not only applied in energy storage power systems such as hydropower, thermal power, wind power, and solar power stations, but also widely applied in electric transportation vehicles such as electric bicycles, electric motorcycles, or electric cars, as well as in military equipment, aerospace, and other fields. With the continuous expansion of the application field of batteries, the market demand for batteries is also constantly increasing.

The manufacturing of electrode plates is an important part of battery manufacturing. During the manufacturing of electrode plates, the current collector is usually coated with an active substance layer, and the coated active substance layer needs to be dried using a drying apparatus. However, the drying efficiency of the existing drying apparatus is relatively low.

In the prior art, the electrode plates are generally dried by hot air. However, at positions near the electrode plate inlet and the electrode plate outlet, the drying temperature of hot-air drying is uniform, the time required for drying the electrode plates is long, and the efficiency is low.

In view of this, the embodiments of the present application provide a drying device. The drying apparatus includes a housing and a drying device. The housing is provided with a drying chamber, the drying chamber is provided with a strip inlet and a strip outlet, and the drying device is disposed in the drying chamber. The drying device includes a first drying module, a second drying module, and a conveying mechanism. The first drying module and the second drying module are configured to dry a material strip, and the conveying mechanism is configured to convey the material strip, such that the material strip sequentially passes through the first drying module, the second drying module, and the strip outlet from the strip inlet. A drying temperature of the first drying module is higher than a drying temperature of the second drying module.

The drying apparatus is provided with the first drying module and the second drying module, and the drying temperature of the first drying module is higher than the drying temperature of the second drying module, such that after the material strip enters the drying chamber from the strip inlet, the material strip is first rapidly dried at a high temperature by the first drying module, and then continuously dried by the second drying module. In this way, not only can the drying efficiency be improved, but also a relatively good drying quality is achieved.

The technical solutions described in the embodiments of the present application are applicable to drying a material strip, and the material strip may be an electrode plate. When the drying apparatus provided in the embodiments of the present application is used to dry the material strip, relatively high drying efficiency can be achieved.

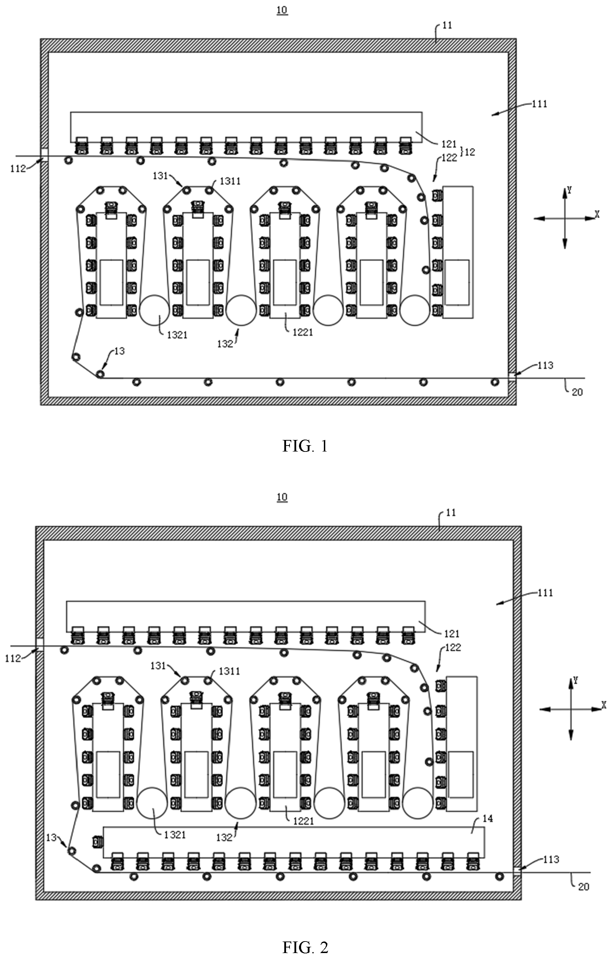

Referring to FIG. 1, FIG. 1 is a schematic diagram of an internal structure of a drying apparatus 10 according to some embodiments of the present application. The embodiments of the present application provide a drying apparatus 10. The drying apparatus 10 includes a housing 11 and a drying device 12. The housing 11 is provided with a drying chamber 111, the drying chamber 111 is provided with a strip inlet 112 and a strip outlet 113, and the drying device 12 is disposed in the drying chamber 111. The drying device 12 includes a first drying module 121, a second drying module 122, and a conveying mechanism 13. The first drying module 121 and the second drying module 122 are configured to dry a material strip 20, and the conveying mechanism 13 is configured to convey the material strip 20, such that the material strip 20 sequentially passes through the first drying module 121, the second drying module 122, and the strip outlet 113 from the strip inlet 112. A drying temperature of the first drying module 121 is higher than a drying temperature of the second drying module 122.

The housing 11 is an outer shell of the drying apparatus 10, and the housing 11 can provide a mounting base for various components of the drying apparatus 10. An accommodating cavity is formed in the housing 11, and the accommodating cavity is configured to accommodate the drying device 12. The drying chamber 111 is provided with a strip inlet 112 and a strip outlet 113. The strip inlet 112 is configured to allow the material strip 20 to enter the drying chamber 111, and the strip outlet 113 is configured to allow the material strip 20 to exit the drying chamber 111.

The first drying module 121 and the second drying module 122 are the main functional modules that achieve the drying function of the drying device 12. Both the first drying module 121 and the second drying module 122 are configured to dry the material strip 20. The structure of the first drying module 121 may be the same as the structure of the second drying module 122, or may be different from the structure of the second drying module 122. The first drying module 121 and the second drying module 122 may be an electric heating module, an infrared drying module, a hot-air drying module, or the like.

The first drying module 121 is closer to the strip inlet 112 than the second drying module 122, and the second drying module 122 is closer to the strip outlet 113 than the first drying module 121. The drying temperature of the first drying module 121 is higher than the drying temperature of the second drying module 122.

The conveying mechanism 13 is a mechanism configured to convey the material strip 20. Under the action of the conveying mechanism 13, the material strip 20 can sequentially pass, from the strip inlet 112, through the first drying module 121, the second drying module 122, and the strip outlet 113. During the conveying of the material strip 20 by the conveying mechanism 13, the first drying module 121 and the second drying module 122 dry the material strip 20.

The drying apparatus 10 is provided with the first drying module 121 and the second drying module 122, and the drying temperature of the first drying module 121 is higher than the drying temperature of the second drying module 122, such that after the material strip 20 enters the drying chamber 111 from the strip inlet 112, the material strip is first rapidly dried at a high temperature by the first drying module 121, and then continuously dried by the second drying module 122. In this way, not only can the drying efficiency be improved, but also a relatively good drying quality is achieved.

Referring to FIG. 1, in some embodiments, the first drying module 121 extends along a first direction. The second drying module 122 includes a plurality of drying parts 1221, and the plurality of drying parts 1221 are arranged along the first direction. The material strip 20 sequentially passes around the plurality of drying parts 1221, and the drying parts 1221 are configured to dry the material strip 20.

The first direction is an extension direction of the first drying module 121, i.e., a length direction of the first drying module 121. Referring to FIG. 1, the first direction may be the X direction shown in the figure.

The second drying module 122 includes a plurality of drying parts 1221, and the arrangement direction of the plurality of drying parts 1221 is the same as the extension direction of the first drying module 121. The drying parts 1221 can dry the material strip 20, and the material strip 20 sequentially passes around the plurality of drying parts 1221. In this way, the plurality of drying parts 1221 can jointly dry the material strip 20.

By providing the plurality of drying parts 1221 and allowing the material strip 20 to sequentially pass around the plurality of drying parts 1221, the space in the drying chamber 111 is effectively utilized, the travel length of the material strip 20 in the drying chamber 111 is increased, and the plurality of drying parts 1221 jointly dry the material strip 20, thereby improving the drying effect.

Referring to FIG. 1, in some embodiments, along a second direction, the drying part 1221 is located at the bottom of the first drying module 121. The second direction intersects with the first direction.

The included angle between the second direction and the first direction may be an acute angle, or the included angle between the second direction and the first direction may be a right angle. Referring to FIG. 1, the second direction may be the Y direction shown in the figure, and in this case, the first direction is perpendicular to the second direction.

The drying part 1221 is located at the bottom of the first drying module 121 along the second direction. Referring to FIG. 1, in the figure, the drying part 1221 is located below the first drying module 121 along the second direction.

The drying part 1221 is located at the bottom of the first drying module 121 along the second direction, which can make full use of the space of the drying chamber 111 in the second direction, thereby reducing the volume occupied by the drying apparatus 10 in the first direction.

Referring to FIG. 2, FIG. 2 is a schematic diagram of an internal structure of a drying apparatus 10 according to some other embodiments of the present application. In some other embodiments, the drying apparatus 10 further includes a third drying module 14. Along a conveying direction of the conveying mechanism 13, the third drying module 14 is located downstream of the second drying module 122. A drying temperature of the third drying module 14 is lower than the drying temperature of the second drying module 122. Along the second direction, the third drying module 14 is located at the bottom of the drying part 1221.

The third drying module 14 is configured to dry the material strip 20, and the third drying module 14 is closer to the strip outlet 113 than the second drying module 122. Under the action of the conveying mechanism 13, the material strip 20 enters the drying chamber 111 from the strip inlet 112, and sequentially passes through the first drying module 121, the second drying module 122, the third drying module 14, and the strip outlet 113. The structure of the third drying module 14 may be the same as the structure of the first drying module 121 and/or the second drying module 122, or may be different from the structure of the first drying module 121 and/or the second drying module 122. The third drying module 14 may be an electric heating module, an infrared drying module, a hot-air drying module, or the like.

The drying temperature of the first drying module 121 is higher than the drying temperature of the second drying module 122, and the drying temperature of the second drying module 122 is higher than the drying temperature of the third drying module 14.

The third drying module 14 is located at the bottom of the drying part 1221 along the second direction. Referring to FIG. 2, the third drying module 14 is located below the drying part 1221 along the second direction; that is, along the second direction, the second drying module 122 is located between the first drying module 121 and the second drying module 122.

The third drying module 14 is provided, and the drying temperature of the third drying module 14 is lower than the drying temperature of the second drying module 122; the material strip 20 sequentially passes through the first drying module 121, the second drying module 122, and the third drying module 14 for drying, thereby achieving a relatively good drying effect. In addition, the third drying module 14 is closer to the strip outlet 113 than the second drying module 122, and the third drying module 14 performs low-temperature drying on the material strip 20, such that the temperature of the material strip 20 is reduced, and the temperature of the material strip 20 approaches the ambient temperature outside the drying apparatus 10. In this way, an excessive temperature difference before and after the material strip 20 exits the drying apparatus 10 is prevented, thereby reducing the risk of wrinkling of the material strip 20 due to a sudden temperature decrease of the material strip 20.

Referring to FIG. 2, in some embodiments, the conveying mechanism 13 includes a plurality of top winding mechanisms 131 and a plurality of bottom winding mechanisms 132. The plurality of top winding mechanisms 131 and the plurality of bottom winding mechanisms 132 are all arranged along the first direction. Along the second direction, the top winding mechanisms 131 are located at the top of the drying parts 1221, and the bottom winding mechanisms 132 are located at the bottom of the drying parts 1221. The material strip 20 alternately passes around the top winding mechanisms 131 and the bottom winding mechanisms 132.

The top winding mechanisms 131 are disposed at the top of the drying parts 1221 along the second direction, and the top winding mechanisms 131 are configured for winding the material strip 20 therearound. It should be noted that the top winding mechanism 131 may be located above the drying part 1221 along the second direction, or may be located on both sides of the upper end of the drying part 1221. In short, the top winding mechanism 131 is disposed in a top end region of the drying part 1221 along the second direction.

The bottom winding mechanisms 132 are disposed at the bottom of the drying parts 1221 along the second direction, and the bottom winding mechanisms 132 are configured for winding the material strip 20 therearound. It should be noted that the bottom winding mechanism 132 may be located below the drying part 1221 along the second direction, or may be located on both sides of the lower end of the drying part 1221. In short, the bottom winding mechanism 132 is disposed in a bottom end region of the drying part 1221 along the second direction.

The plurality of top winding mechanisms 131 and the plurality of bottom winding mechanisms 132 are all arranged along the first direction. Along the first direction, the bottom winding mechanism 132 may be disposed between two adjacent top winding mechanisms 131, and the top winding mechanism 131 may also be disposed between two adjacent bottom winding mechanisms 132. That is, the top winding mechanisms 131 and the bottom winding mechanisms 132 are alternately disposed along the first direction. The material strip 20 alternately passes around the top winding mechanisms 131 and the bottom winding mechanisms 132, such that the material strip 20 forms a curved travel path in the drying chamber 111.

By providing the plurality of top winding mechanisms 131 and the plurality of bottom winding mechanisms 132, and allowing the material strip 20 to alternately pass around the top winding mechanisms 131 and the bottom winding mechanisms 132, the material strip 20 forms a curved travel path in the drying chamber 111, such that the travel length of the material strip 20 in the drying chamber 111 is increased, and the joint drying of the material strip 20 by the plurality of drying parts 1221 is facilitated, thereby improving the drying effect.

Referring to FIG. 2, in some embodiments, at least one top winding mechanism 131 includes a plurality of first rollers 1311 spaced apart from each other along an arc-shaped trajectory, and the first rollers 1311 are configured for winding the material strip 20 therearound.

The at least one top winding mechanism 131 includes a plurality of first rollers 1311, and the plurality of first rollers 1311 are spaced apart from each other along an arc-shaped trajectory. In some embodiments, the plurality of first rollers 1311 are spaced apart from each other along a circular arc trajectory. In some other embodiments, the plurality of first rollers 1311 are spaced apart from each other along a parabolic trajectory (the open side of the parabola faces the bottom of the drying part 1221).

The plurality of first rollers 1311 are provided, and the material strip 20 is wound around and in contact with each first roller 1311, such that the total contact area between the plurality of first rollers 1311 and the material strip 20 is increased, thereby enabling the material strip 20 to be less prone to wrinkling and deviation. In addition, the plurality of first rollers 1311 are spaced apart from each other along an arc-shaped trajectory, such that the weight of the material strip 20 is not entirely concentrated on a single first roller 1311, but the weight of the material strip 20 can be distributed among the plurality of first rollers 1311. Thus, the tension of the material strip 20 between two adjacent first rollers 1311 is relatively small, thereby enabling the material strip 20 to be less prone to wrinkling or breakage.

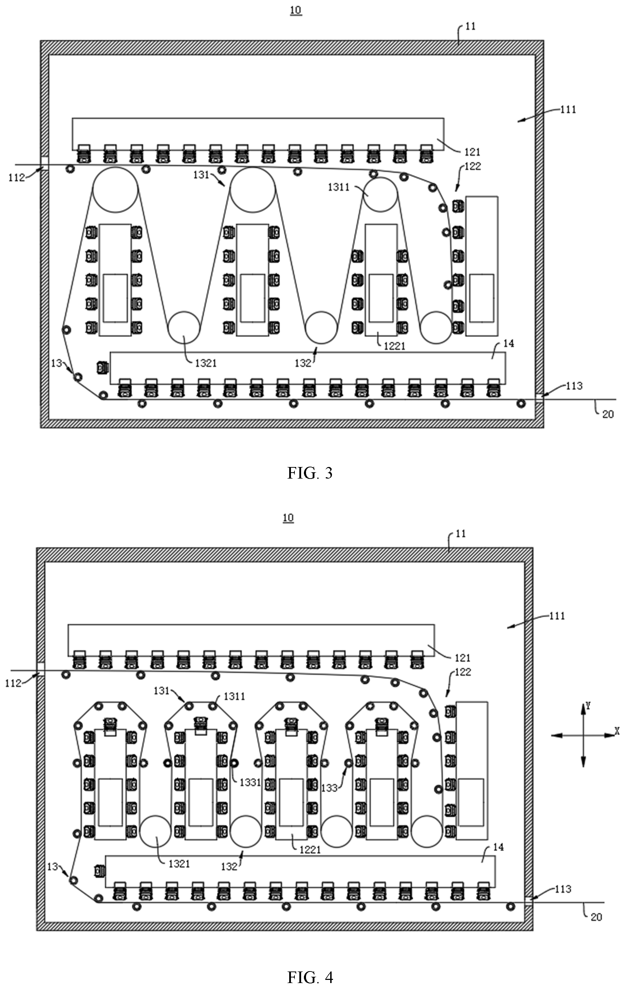

Referring to FIG. 3, in yet some other embodiments, at least one top winding mechanism 131 includes a first roller 1311, and the first roller 1311 is configured for winding the material strip 20 therearound. The material strip 20 alternately passes around the first rollers 1311 and the bottom winding mechanisms 132.

In some embodiments, at least one bottom winding mechanism 132 includes a heating roller 1321 configured for winding the material strip 20 therearound, and the heating roller 1321 is configured to heat and dry the material strip 20.

The heating roller 1321 is a roller structure capable of generating heat by itself. The heating roller 1321 can heat and dry the material strip 20 wound therearound.

By providing the heating roller 1321, the heating roller 1321 not only can serve to convey the material strip 20, but also can heat and dry the material strip 20, thereby helping to improve the drying efficiency.

Referring to FIG. 4, FIG. 4 is a schematic diagram of an internal structure of a drying apparatus 10 according to still some other embodiments of the present application. In still some other embodiments, the conveying mechanism 13 further includes a side winding mechanism 133. Along the first direction, at least one side of the drying part 1221 is provided with the side winding mechanism 133. The material strip 20 sequentially passes around the top winding mechanism 131, the side winding mechanism 133, and the bottom winding mechanism 132.

Along the first direction, the side winding mechanism 133 may be disposed on only one side of the drying part 1221, or the side winding mechanisms 133 may be disposed on both sides of the drying part 1221.

Optionally, along the first direction, the side winding mechanism 133 is located between the top winding mechanism 131 and the bottom winding mechanism 132, such that the material strip 20 sequentially passes around the top winding mechanism 131, the side winding mechanism 133, and the bottom winding mechanism 132.

By providing the side winding mechanism 133, the weight of the material strip 20 is shared by the side winding mechanism 133, thereby reducing the risk of excessive tension on the material strip 20 due to its own weight, and enabling the material strip 20 to be less prone to wrinkling or breakage. In addition, by providing the side winding mechanism 133 and allowing the material strip 20 to sequentially pass around the top winding mechanism 131, the side winding mechanism 133, and the bottom winding mechanism 132, the material strip 20 receives increased support, thereby reducing the risk of vibration of the material strip 20 under the action of an external force.

Referring to FIG. 4, in some embodiments, the side winding mechanism 133 includes at least one second roller 1331 configured for winding the material strip 20 therearound.

The side winding mechanism 133 may include only one second roller 1331, and the side winding mechanism 133 may also include a plurality of second rollers 1331. For example, the side winding mechanism 133 may include two second rollers 1331, three second rollers 1331, or more than three second rollers 1331.

By providing the second roller 1331 configured for winding the material strip 20 therearound, it is simple, convenient, and cost-effective.

In some embodiments, the conveying mechanism 13 includes a heating roller 1321 configured for winding the material strip 20 therearound, and the heating roller 1321 is configured to heat and dry the material strip 20.

By providing the heating roller 1321, the heating roller 1321 not only can serve to convey the material strip 20, but also can heat and dry the material strip 20, thereby helping to improve the drying efficiency.

Referring to FIG. 4, in some embodiments, the first drying module 121 is an infrared drying module, and the second drying module 122 is a hot-air drying module.

The infrared drying module may include an infrared lamp tube, and the infrared lamp tube can emit infrared light to dry the material strip 20.

The hot-air drying module can blow hot air to dry the material strip 20.

When the material strip 20 just enters the drying chamber 111, the active substance layer has a relatively high moisture content, resulting in a relatively large self-weight of the material strip 20, such that the material strip 20 is more likely to vibrate when subjected to an external force. Therefore, when the material strip 20 is dried by the infrared drying module, the infrared drying module does not apply a force to the material strip 20, thereby reducing the risk of vibration of the material strip 20. The hot-air drying module generates hot air to dry the material strip 20, such that the material strip 20 is dried more uniformly, thereby improving the drying quality.

Referring to FIG. 4, in some embodiments, the drying apparatus 10 further includes a third drying module 14. Along a conveying direction of the conveying mechanism 13, the third drying module 14 is located downstream of the second drying module 122. A drying temperature of the third drying module 14 is lower than the drying temperature of the second drying module 122.

The third drying module 14 is configured to dry the material strip 20, and the third drying module 14 is closer to the strip outlet 113 than the second drying module 122. Under the action of the conveying mechanism 13, the material strip 20 enters the drying chamber 111 from the strip inlet 112, and sequentially passes through the first drying module 121, the second drying module 122, the third drying module 14, and the strip outlet 113. The structure of the third drying module 14 may be the same as the structure of the first drying module 121 and/or the second drying module 122, or may be different from the structure of the first drying module 121 and/or the second drying module 122. The third drying module 14 may be an electric heating module, an infrared drying module, a hot-air drying module, or the like. The drying temperature of the first drying module 121 is higher than the drying temperature of the second drying module 122, and the drying temperature of the second drying module 122 is higher than the drying temperature of the third drying module 14.

The third drying module 14 is provided, and the drying temperature of the third drying module 14 is lower than the drying temperature of the second drying module 122; the material strip 20 sequentially passes through the first drying module 121, the second drying module 122, and the third drying module 14 for drying, thereby achieving a relatively good drying effect. In addition, the third drying module 14 is closer to the strip outlet 113 than the second drying module 122, and the third drying module 14 performs low-temperature drying on the material strip 20, such that the temperature of the material strip 20 is reduced, and the temperature of the material strip 20 approaches the ambient temperature outside the drying apparatus 10. In this way, an excessive temperature difference before and after the material strip 20 exits the drying apparatus 10 is prevented, thereby reducing the risk of wrinkling of the material strip 20 due to a sudden temperature decrease of the material strip 20.

In some embodiments, the third drying module 14 is an infrared drying module.

The infrared drying module is used to perform low-temperature drying. The drying temperature is easy to control, the drying cost is low, and the drying process is less susceptible to external airflow interference, thereby achieving a relatively good drying effect.

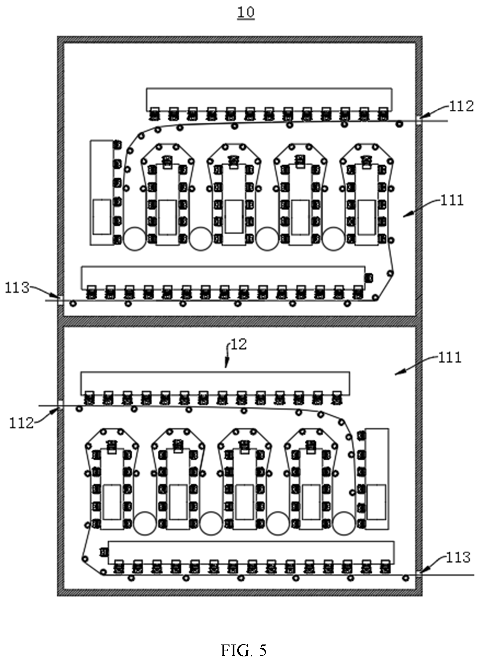

Referring to FIG. 5, in some embodiments, the housing 11 is provided with two drying chambers 111 independent of each other. The two drying chambers 111 are arranged along a gravity direction, and each drying chamber 111 is provided with the drying device 12 therein.

The housing 11 is provided with two drying chambers 111, and the two drying chambers 111 are not in communication with each other. The two drying chambers 111 are arranged along the gravity direction, and each drying chamber 111 is provided with the drying device 12 therein. One drying chamber 111 may be configured to dry one side of the material strip 20 in a thickness direction thereof, and the other drying chamber 111 may be configured to dry the other side of the material strip 20 material strip 20 in the thickness direction thereof.

By providing the two drying chambers 111, one drying chamber 111 may be configured to dry one side of the material strip 20, and the other drying chamber 111 may be configured to dry the other side of the material strip 20, thereby improving the drying effect on the material strip 20. By arranging the two drying chambers 111 along the gravity direction, the space in the gravity direction is effectively utilized, thereby reducing the area occupied by the drying apparatus 10.

Referring to FIG. 5, in some embodiments, along a first direction, the housing 11 is provided with a first side and a second side opposite to each other. The first direction intersects with the gravity direction. A strip inlet 112 of one drying chamber 111 and a strip outlet 113 of the other drying chamber 111 are located on the first side, and a strip outlet 113 of one drying chamber 111 and a strip inlet 112 of the other drying chamber 111 are located on the second side.

The housing 11 is provided with a first side and a second side along the first direction, and the first side and the second side are disposed opposite to each other. The first side is provided with a strip inlet 112 of one drying chamber 111 and a strip outlet 113 of the other drying chamber 111, and the second side is provided with a strip outlet 113 of the one drying chamber 111 and a strip inlet 112 of the other drying chamber 111.

By allowing the strip inlet 112 of one drying chamber 111 and the strip outlet 113 of the other drying chamber 111 to be located on the first side, and allowing the strip outlet 113 of one drying chamber 111 and the strip inlet 112 of the other drying chamber 111 to be located on the second side, after the material strip 20 is discharged from the strip outlet 113 of one drying chamber 111, the material strip can then enter the other drying chamber 111 from the strip inlet 112 of the other drying chamber 111, which is simple and rapid and reduces the transfer of the material strip 20.

The embodiments of the present application further provide a manufacturing system for an electrode plate. The manufacturing system for an electrode plate includes a manufacturing apparatus for an electrode plate and the above drying apparatus 10. The manufacturing apparatus for an electrode plate is configured to manufacture an electrode plate; the drying apparatus 10 is disposed downstream of the manufacturing apparatus for an electrode plate, and the drying apparatus 10 is configured to dry the electrode plate.

According to some embodiments of the present application, refer to FIGs. 1 to 5.

The embodiments of the present application provide a drying apparatus 10. The drying apparatus 10 includes a housing 11 and a drying device 12. The housing 11 is provided with a drying chamber 111, the drying chamber 111 is provided with a strip inlet 112 and a strip outlet 113, and the drying device 12 is disposed in the drying chamber 111. The drying device 12 includes a first drying module 121, a second drying module 122, and a conveying mechanism 13. The first drying module 121 and the second drying module 122 are configured to dry a material strip 20, and the conveying mechanism 13 is configured to convey the material strip 20, such that the material strip 20 sequentially passes through the first drying module 121, the second drying module 122, and the strip outlet 113 from the strip inlet 112. A drying temperature of the first drying module 121 is higher than a drying temperature of the second drying module 122. The drying apparatus 10 is provided with the first drying module 121 and the second drying module 122, and the drying temperature of the first drying module 121 is higher than the drying temperature of the second drying module 122, such that after the material strip 20 enters the drying chamber 111 from the strip inlet 112, the material strip is first rapidly dried at a high temperature by the first drying module 121, and then continuously dried by the second drying module 122. In this way, not only can the drying efficiency be improved, but also a relatively good drying quality is achieved.

The first drying module 121 extends along a first direction. The second drying module 122 includes a plurality of drying parts 1221. The plurality of drying parts 1221 are arranged along the first direction, and the material strip 20 sequentially passes around the plurality of drying parts 1221. The drying parts 1221 are configured to dry the material strip 20. The conveying mechanism 13 includes a plurality of top winding mechanisms 131 and a plurality of bottom winding mechanisms 132. The plurality of top winding mechanisms 131 and the plurality of bottom winding mechanisms 132 are all arranged along the first direction. Along the second direction, the top winding mechanisms 131 are located at the top of the drying parts 1221, and the bottom winding mechanisms 132 are located at the bottom of the drying parts 1221. The material strip 20 alternately passes around the top winding mechanisms 131 and the bottom winding mechanisms 132. By providing the plurality of top winding mechanisms 131 and the plurality of bottom winding mechanisms 132, and allowing the material strip 20 to alternately pass around the top winding mechanisms 131 and the bottom winding mechanisms 132, the material strip 20 forms a curved travel path in the drying chamber 111, such that the travel length of the material strip 20 in the drying chamber 111 is increased, and the joint drying of the material strip 20 by the plurality of drying parts 1221 is facilitated, thereby improving the drying effect.

At least one top winding mechanism 131 includes a plurality of first rollers 1311 spaced apart from each other along an arc-shaped trajectory, and the first rollers 1311 are configured for winding the material strip 20 therearound. The plurality of first rollers 1311 are provided, and the material strip 20 is wound around and in contact with each first roller 1311, such that the total contact area between the plurality of first rollers 1311 and the material strip 20 is increased, thereby enabling the material strip 20 to be less prone to wrinkling and deviation. In addition, the plurality of first rollers 1311 are spaced apart from each other along an arc-shaped trajectory, such that the weight of the material strip 20 is not entirely concentrated on a single first roller 1311, but the weight of the material strip 20 can be distributed among the plurality of first rollers 1311. Thus, the tension of the material strip 20 between two adjacent first rollers 1311 is relatively small, thereby enabling the material strip 20 to be less prone to wrinkling or breakage.

At least one bottom winding mechanism 132 includes a heating roller 1321 configured for winding the material strip 20 therearound, and the heating roller 1321 is configured to heat and dry the material strip 20. By providing the heating roller 1321, the heating roller 1321 not only can serve to convey the material strip 20, but also can heat and dry the material strip 20, thereby helping to improve the drying efficiency.

The drying apparatus 10 further includes a third drying module 14. Along a conveying direction of the conveying mechanism 13, the third drying module 14 is located downstream of the second drying module 122. A drying temperature of the third drying module 14 is lower than the drying temperature of the second drying module 122. The third drying module 14 is provided, and the drying temperature of the third drying module 14 is lower than the drying temperature of the second drying module 122; the material strip 20 sequentially passes through the first drying module 121, the second drying module 122, and the third drying module 14 for drying, thereby achieving a relatively good drying effect. In addition, the third drying module 14 is closer to the strip outlet 113 than the second drying module 122, and the third drying module 14 performs low-temperature drying on the material strip 20, such that the temperature of the material strip 20 is reduced, and the temperature of the material strip 20 approaches the ambient temperature outside the drying apparatus 10. In this way, an excessive temperature difference before and after the material strip 20 exits the drying apparatus 10 is prevented, thereby reducing the risk of wrinkling of the material strip 20 due to a sudden temperature decrease of the material strip 20.

The above are only preferred embodiments of the present application and are not intended to limit the present application. For those skilled in the art, the present application can be modified and varied. Any modification, equivalent substitution, improvement, and the like made within the spirit and principle of the present application shall all fall within the protection scope of the present application.

## Claims

1. A drying apparatus, wherein the drying apparatus comprises:
a housing, provided with a drying chamber, the drying chamber being provided with a strip inlet and a strip outlet;
a drying device, disposed in the drying chamber, wherein the drying device comprises a first drying module, a second drying module, and a conveying mechanism; the first drying module and the second drying module are configured to dry a material strip, and the conveying mechanism is configured to convey the material strip, such that the material strip sequentially passes through the first drying module, the second drying module, and the strip outlet from the strip inlet; a drying temperature of the first drying module is higher than a drying temperature of the second drying module.

2. The drying apparatus according to claim 1, wherein the first drying module extends along a first direction; the second drying module comprises a plurality of drying parts, the plurality of drying parts are arranged along the first direction, and the material strip sequentially passes around the plurality of drying parts, the drying parts being configured to dry the material strip.

3. The drying apparatus according to claim 2, wherein along a second direction, the drying part is located at a bottom of the first drying module, and the second direction intersects with the first direction.

4. The drying apparatus according to claim 3, wherein the drying apparatus further comprises a third drying module; along a conveying direction of the conveying mechanism, the third drying module is located downstream of the second drying module, and a drying temperature of the third drying module is lower than the drying temperature of the second drying module; along the second direction, the third drying module is located at a bottom of the drying part.

5. The drying apparatus according to claim 3 or 4, wherein the conveying mechanism comprises a plurality of top winding mechanisms and a plurality of bottom winding mechanisms; the plurality of top winding mechanisms and the plurality of bottom winding mechanisms are all arranged along the first direction, and along the second direction, the top winding mechanisms are located at a top of the drying parts, and the bottom winding mechanisms are located at a bottom of the drying parts;
the material strip alternately passes around the top winding mechanisms and the bottom winding mechanisms.

6. The drying apparatus according to claim 5, wherein at least one top winding mechanism comprises a plurality of first rollers spaced apart from each other along an arc-shaped trajectory, and the first rollers are configured for winding the material strip therearound.

7. The drying apparatus according to claim 5 or 6, wherein at least one bottom winding mechanism comprises a heating roller configured for winding the material strip therearound, and the heating roller is configured to heat and dry the material strip.

8. The drying apparatus according to any one of claims 5 to 7, wherein the conveying mechanism further comprises a side winding mechanism; along the first direction, at least one side of the drying part is provided with the side winding mechanism, and the material strip sequentially passes around the top winding mechanism, the side winding mechanism, and the bottom winding mechanism.

9. The drying apparatus according to claim 8, wherein the side winding mechanism comprises at least one second roller configured for winding the material strip therearound.

10. The drying apparatus according to any one of claims 1 to 9, wherein the conveying mechanism comprises a heating roller configured for winding the material strip therearound, and the heating roller is configured to heat and dry the material strip.

11. The drying apparatus according to any one of claims 1 to 10, wherein the first drying module is an infrared drying module, and the second drying module is a hot-air drying module.

12. The drying apparatus according to any one of claims 1 to 11, wherein the drying apparatus further comprises a third drying module; along a conveying direction of the conveying mechanism, the third drying module is located downstream of the second drying module, and a drying temperature of the third drying module is lower than a drying temperature of the second drying module.

13. The drying apparatus according to claim 12, wherein the third drying module is an infrared drying module.

14. The drying apparatus according to any one of claims 1 to 12, wherein the housing is provided with two drying chambers independent of each other; the two drying chambers are arranged along a gravity direction, and each of the drying chambers is provided with the drying device therein.

15. The drying apparatus according to claim 14, wherein along a first direction, the housing is provided with a first side and a second side opposite to each other, the first direction intersects with the gravity direction, a strip inlet of one drying chamber and a strip outlet of the other drying chamber are located on the first side, and a strip outlet of one drying chamber and a strip inlet of the other drying chamber are located on the second side.

16. A manufacturing system for an electrode plate, comprising:
a manufacturing apparatus for an electrode plate, configured to manufacture an electrode plate; and
the drying apparatus according to any one of claims 1 to 15, disposed downstream of the manufacturing apparatus for an electrode plate, the drying apparatus being configured to dry the electrode plate.
